# EUROPÄISCHE PATENTSCHRIFT

(11) **EP 3 214 466 B1**
(45) Veröffentlichungstag und Bekanntmachung des Hinweises auf die Patenterteilung: **08.05.2019**
(21) Anmeldenummer: 16158736.5
(22) Anmeldetag: 04.03.2016
(51) Int. Cl.: G01V 8/20

(54) **LICHTGITTER UND VERFAHREN MIT LICHTGITTER**
LIGHT GRID AND METHOD WITH LIGHT GRID
BARRIERE LUMINEUSE ET PROCEDE COMPRENANT UNE BARRIERE LUMINEUSE

(43) Veröffentlichungstag der Anmeldung: 06.09.2017
(73) Patentinhaber: SICK AG, 79183 Waldkirch (DE)
(72) Erfinder: Bürger, Jürgen, 79331 Nimburg (DE); Kienzler, Stefan, 79874 Breitnau (DE); Herrmann, Ralf, 77974 Meißenheim-Kürzell (DE)

(56) Entgegenhaltungen:
- DE-A1-102008 004 941
- DE-U1- 29 500 873
- DE-U1-202007 014 653

## Beschreibung

Die vorliegende Erfindung betrifft ein Lichtgitter nach dem Oberbegriff von Anspruch 1 sowie ein Verfahren mit einem Lichtgitter nach dem Oberbegriff von Anspruch 4.

Lichtgitter bzw. Automatisierungslichtgitter werden als messende Systeme zur Bestimmung von Objekthöhen und/oder Objektbreiten eingesetzt. Weiter werden Lichtgitter bzw. Automatisierungslichtgitter zur Detektion von Objekten in einem Überwachungsbereich eingesetzt.

Bei diesen Anwendungen wird eine Unterbrechung eines Lichtstrahles in dem Überwachungsbereich ausgewertet.

Wird nun eine komplexere Auswertung der Überwachungsfläche, also eines zweidimensionalen Bereichs notwendig, bedeutet dies eine dem Lichtgitter nachgelagerte Auswertung.

In diesen Fällen liefert das Lichtgitter permanent Informationen über die einzelnen Lichtschranken, bzw. Lichtachsen mit den Lichtstrahlen an eine externe Auswerteeinheit, beispielsweise einen PC oder eine PC ähnliche Einheit, welche quasi die Einzelschnittaufnahmen im Überwachungsbereich des Lichtgitters fortlaufend zu einem Bild zusammensetzt und auswertet.

Je nach Abtastrate und Anzahl der Strahlen müssen eine hohe Menge an Daten an die externe Auswerteeinheit übertragen werden und die externe Auswerteeinheit muss sehr leistungsfähig ausgebildet sein, um die ständig anfallenden Daten auswerten zu können. Dadurch entsteht ein hoher Aufwand bei der externen Auswerteeinheit.

Weiter muss auch eine Datenschnittstelle des Lichtgitters leistungsfähig ausgebildet werden, um eine hohe Menge an Daten an die externe Auswerteeinheit bereitzustellen.

Die DE 102 01 894 B4 offenbart ein Lichtgitter mit zusätzlichen Eingängen und einer integrierten frei programmierbaren Logikeinheit.

Die DE 103 29 881 A1 offenbart ein Lichtgitter zur Konturvermessung, wobei im Lichtgitter Referenzwerte gespeichert werden. Die Referenzwerte werden beispielsweise mittels Einlernen bzw. Teach-In an markanten Punkten eingelernt.

Die DE 295 00 873 U1 offenbart ein Lichtgitter mit einer Reihe nebeneinander angeordneter Lichtsender, die nacheinander und zyklisch zumindest im wesentlichen senkrecht zur Sender-Reihenanordnung Lichtstrahlen durch ein Schutzfeld zu einer zumindest im wesentlichen parallel zur Sender-Reihenanordnung verlaufenden Reihe nebeneinander angeordneter Lichtempfänger schicken und so das Schutzfeld zyklisch abtasten, mit einem Speicher, in dem alle Ausgangssignale der Lichtempfänger bei jeder Abtastung ablegbar sind, und eine Abtast- und Vergleichsstufe, in der bei der nächsten Abtastung festgestellt wird, ob bei zwei aufeinanderfolgenden Abtastungen zwei beabstandete Lichtbündel unterbrochen werden und welchen Abstand sie haben, und welche ein Warn- oder Abschaltsignal nur dann abgibt, wenn bei zwei aufeinanderfolgenden Abtastungen zwei beabstandete Lichtbündel unterbrochen werden.

Die DE 20 2007 014 653 U1 offenbart Konfigurationsmittel für ein Sicherheits-Lichtgitter mit einer ersten Leiste, die eine Reihe erster Lichtsender und erster Lichtempfänger aufweist und einer zweiten Leiste, die den ersten Lichtsendern und ersten Lichtempfängern entsprechende zweite Lichtempfänger und zweite Lichtsender aufweist, so dass eine Vielzahl zueinander paralleler und ein Schutzfeld bildender Lichtschranken gebildet ist, mit wenigstens einer Steuer- und Auswerteeinheit, die die einzelnen Lichtschranken steuert und auswertet, so dass bei Unterbrechung einer oder mehrerer Lichtschranken durch ein Objekt ein Warn- oder Steuersignal ableitbar ist, wobei das Konfigurationsmittel durch eine optische Schnittstelleneinheit gebildet ist, welche zwischen den Lichtsendern und den Lichtempfängern einer Leiste positionierbar ist, um wenigstens einen Lichtsender und einen Lichtempfänger einer Leiste optisch anzukoppeln, wodurch eine Konfiguration einstellbar ist.

Die DE 10 2008 004 941 A1 offenbart eine Sicherheitsanordnung zur Überwachung eines Durchgangs, durch den nur zulässige Objekte in wenigstens eine Bewegungsrichtung befördert werden, mit einem ersten optoelektronischen Sensor, der wenigstens einen Lichtsender und wenigstens einen Lichtempfänger aufweist zur Überwachung eines ebenen, in dem Durchgang angeordneten Schutzfelds auf Durchtritt durch das Objekt, mit wenigstens einer Steuer- und Auswerteeinheit, durch die bei Durchtritt eines unzulässigen Objektes ein Warn- oder Steuersignal ableitbar ist, mit einem Muting-Sensor, welcher in Bewegungsrichtung vor dem Durchgang angeordnet und mit der Steuer- und Auswerteeinheit zur rechtzeitigen Deaktivierung des Schutzfeldes bei zulässigen Objekten verbunden ist, wobei in der Steuer- und Auswerteeinheit Mittel zur Bestimmung und Auswertung einer Objektgeschwindigkeit vorhanden sind und dass abhängig von einer Objektdetektion durch den Muting-Sensor und abhängig von der Objektgeschwindigkeit das Warn- oder Steuersignal für einen berechneten Zeitpunkt und für eine berechnete Dauer unterdrückbar ist und zwar von dem Zeitpunkt des Einfahrens des Objektes in das Schutzfeld bis zum Verlassen des Schutzfeldes, so dass das Schutzfeld nur für die Dauer des tatsächlichen Durchtritts des zulässigen Objektes deaktiviert ist.

Eine Aufgabe der Erfindung besteht darin, ein Lichtgitter bereitzustellen, wobei eine einfache und kostengünstige Auswerteeinheit direkt im Lichtgitter angeordnet sein soll und direkt Ausgangssignale, insbesondere Ausgangsschaltsignale an eine Maschinensteuerung bzw. eine speicherprogrammierbare Steuerung, bereitgestellt werden sollen.

Die Aufgabe wird durch ein Lichtgitter gemäß Anspruch 1 und ein Verfahren gemäß Anspruch 4 gelöst.

Die Erfindung geht von dem Grundgedanken aus, dass keine Vielzahl von vollständigen Abtastungen des Lichtgitters bzw. Schnitten oder Zyklen entlang des Objektes und deren gesamte Daten ausgewertet werden müssen.

Gemäß der Erfindung werden nur markante Schnitte bzw. Zyklen analysiert und daraus eine Entscheidung abgeleitet.

Hierzu bedarf es keiner aufwendigen Speicherung und auch keiner aufwendigen Rechenleistung der Auswerteeinheit.

Gemäß der Erfindung ist es möglich anhand wichtiger Merkmalsabfolgen eine Klassifizierung der Informationen empfangener Lichtstrahlen während eines Zyklus vorzunehmen. Die Auswerteeinheit ist nämlich ausgebildet, empfangene Signale der Lichtempfänger eines Zyklus anhand vordefinierter Strahlbewertungskriterien auszuwerten.

Die Informationen empfangener Strahlen können nach einem Bewerten mit Strahlbewertungskriterien der Auswerteeinheit wieder verworfen werden. Auch Informationen empfangender Strahlen, die keine Auswertung durch Strahlbewertungskriterien zulassen, da diese keinen vorbestimmten Kriterien entsprechen, können verworfen werden, so dass diese nicht gespeichert werden müssen, wodurch kein Speicherplatz benötigt wird.

Lediglich mindestens ein Zwischenergebnis, insbesondere zwei oder insbesondere mehr als zwei Zwischenergebnisse, brauchen gespeichert bzw. zwischengespeichert werden. Dadurch braucht gemäß der Erfindung nur wenig Information gespeichert werden, wodurch der elektronische Speicher viel kleiner ausgebildet werden braucht.

Die Auswerteeinheit ist ausgebildet, mindestens ein Zwischenergebnis jeweils eines Zyklus anhand mindestens jeweils eines vordefinierten Abfolgekriteriums auszuwerten. Das Zwischenergebnis bzw. Auswerteergebnis wird zwischengespeichert und zur Weiterverarbeitung in der Auswerteeinheit bereitgehalten. Dabei können auch mehrere verschiedene Zwischenergebnisse bzw. Auswerteergebnisse in der Auswerteeinheit zwischengespeichert werden.

Weiter ist die Auswerteeinheit dazu ausgebildet, aufgrund des ausgewerteten Zwischenergebnisses ein Ausgangssignal auszugeben. Das Ausgangssignal steuert eine nachfolgende Maschine bzw. einen Aktor einer nachgeordneten Maschine. Das Ausgangssignal kann dabei ein binäres Ausgangssignal, beispielsweise ein Schaltsignal sein. Weiter kann es sich auch um eine Vielzahl von Daten bzw. einen kontinuierlichen Datenstrom bei dem Ausgangssignal handeln. Beispielsweise wird das Ausgangssignal über ein Bussystem ausgegeben.

Gemäß der Erfindung werden die Informationen der Zyklen direkt in der Auswerteeinheit des Lichtgitters ausgewertet und lediglich die daraus erhaltenen Zwischenergebnisse gespeichert. Dadurch wird die Menge an Informationen sehr reduziert, wodurch nur noch ein Bruchteil der Informationen gespeichert werden braucht.

Gemäß der Erfindung werden Objekte, die in das Überwachungsfeld eintreten und von dem Lichtgitter erfasst werden, anhand markanter Schnitte, nämlich anhand der Strahlbewertungskriterien pro Zyklus analysiert und daraus eine Entscheidung abgeleitet. Die nicht mehr relevanten Zyklen bzw. Schnitte bzw. die in der Vergangenheit liegenden Schnitte und Zyklen können verworfen werden.

Die Erfindung wird eingesetzt, wenn eine Entscheidung zur Objekterkennung bzw. Objektklassifizierung nicht mehr aufgrund eines einzigen Lichtschnittes bzw. Zyklus, sondern aus mehreren Lichtschnitten bzw. Zyklen erfolgen soll.

Als weitere Bedingung muss die Auswertung auf einige bzw. wenige Merkmale reduziert werden können, um daraus unmittelbar eine Entscheidung ableiten zu können. Zum Beispiel kann eine Fahrzeugkarosserie auf wenige Merkmale reduziert werden, wodurch beispielsweise die Fahrzeugkarosserien in beispielsweise vier Fahrzeugklassen aufgeteilt werden können. Gemäß der Erfindung kann das Lichtgitter mit der Auswerteeinheit Ausgangssignale ausgeben, die beispielsweise vier unterschiedliche Fahrzeugklassen anzeigen. Aufgrund dieser Ausgangssignale kann eine nachgeordnete Maschine Bearbeitungsvorgänge einstellen.

Die Schnittstelle für die Auswerteeinheit kann einfach ausgestaltet sein, da keine hohen Datenmengen übertragen werden müssen. Dadurch sind die technischen Anforderungen an die Schnittstelle eher gering.

Gemäß der Erfindung wird eine Steuerfunktion durch das Lichtgitter selbst realisiert bzw. teilweise realisiert und muss nicht mehr vollständig durch eine nachgeordnete speicherprogrammierbare Steuerung realisiert werden.

Gemäß der Erfindung wird somit eine Datenmenge an eine nachgeordnete speicherprogrammierbare Steuerung reduziert.

Das erfindungsgemäße Lichtgitter ist vielseitig einsetzbar, da es flexibel programmierbar ist und dadurch an unterschiedlichste Anwendungen anpassbar ist.

Das Lichtgitter kann direkt vom Anwender einfach programmiert werden, ohne dass spezielle Programmierkenntnisse notwendig sind, da die Programmierung einfach grafisch mit vordefinierten Programmteilen vorgenommen werden kann.

Das Know-how zu dem Lichtgitterprogramm verbleibt gemäß der Erfindung beim Anwender. Da der Anwender das Programm selbst erstellen kann, braucht der Anwender sein Anwendungs-Know-how bzw. sein Anwendungswissen nicht dem Lichtgitterhersteller selbst mitzuteilen bzw. preiszugeben.

Gemäß der Erfindung kann jedes Lichtgitter individuell programmiert werden. Dadurch müssen keine Sondergeräte bereitgestellt werden. Dadurch ist die Produktion der Lichtgitter einfacher, da lediglich Lichtgitter mit unterschiedlichen Längen und unterschiedlicher Strahlanzahl bereitgestellt werden müssen.

In Weiterbildung der Erfindung ist die Auswerteeinheit über einen Personal Computer und eine grafische Programmiersoftware programmierbar. Durch die grafische Programmiersoftware können die Strahlbewertungskriterien vordefiniert werden und an die Auswerteeinheit übertragen werden. Die Strahlbewertungskriterien sind in der Programmiersoftware bereits vordefiniert und brauchen von dem Anwender nur noch ausgewählt werden und zu einem Programm zusammengefügt werden.

Weiter werden mit Hilfe der Programmiersoftware die Abfolgekriterien eingegeben und mit den Strahlbewertungskritierien zu einem Programm verknüpft.

Bei der Programmierung bedient man sich modifizierten bedingten Abfragen. Das Programm arbeitet schematisch wie folgt mit den Schritten:
- Bewerten des Zyklus anhand vordefinierter Strahlbewertungskriterien,
- ein Zwischenergebnis bilden und abspeichern,
- mindestens ein Zwischenergebnis anhand eines Abfolgekriteriums auswerten,
- Ausgeben eines Ausgangssignals aufgrund der Auswertung und
- Rücksprung zum ersten Schritt.

Dadurch ist es möglich, eine Vielzahl von Anwendungen bzw. Applikationen mit dem erfindungsgemäßen programmierbaren Lichtgitter einfach und direkt im Lichtgitter zu lösen.

Gemäß der Erfindung sind die Strahlbewertungskriterien vordefiniert und mindestens eines der folgenden Strahlbewertungskriterien ist einstellbar;
- ein vorbestimmter festgelegter Lichtstrahl ist unterbrochen,
- ein vorbestimmter festgelegter Lichtstrahl ist nicht unterbrochen, sondern frei,
- ein zentraler Lichtstrahl ist unterbrochen,
- ein zentraler Lichtstrahl ist nicht unterbrochen, sondern frei,
- ein erster Lichtstrahl ist unterbrochen,
- ein erster Lichtstrahl ist nicht unterbrochen, sondern frei,
- eine lückenlos zusammenhängende Anzahl von Lichtstrahlen ist unterbrochen.
- eine lückenlos zusammenhängende Anzahl von Lichtstrahlen ist nicht unterbrochen, sondern frei,
- ein letzter Lichtstrahl ist unterbrochen,
- ein letzter Lichtstrahl ist nicht unterbrochen, sondern frei,
- eine vorbestimmte festgelegte Anzahl von Lichtstrahlen ist unterbrochen,
- eine vorbestimmte festgelegte Anzahl von Lichtstrahlen ist nicht unterbrochen, sondern frei.

Jedoch können auch beliebige Strahlmuster vordefiniert werden. Bei den Strahlbewertungskriterien sind optional Toleranzen einstellbar bzw. werden Toleranzen optional bei der Auswertung der Strahlbewertungskriterien berücksichtigt.

Gemäß dieser Weiterbildung sind die empfangenen Signale der Lichtempfänger auf wenige Merkmale beschränkbar. Die Strahlbewertungskriterien stellen Bedingungen dar, mit welchen die Signale der Lichtempfänger bewertet werden, innerhalb eines Zyklus.

Die Strahlbewertungskriterien sind in der Programmiersoftware bereits als Module vordefiniert und können von dem Anwender einfach ausgewählt werden und ggf. noch modifiziert werden. Die Strahlbewertungskriterien werden beispielsweise als ,Condition' bezeichnet und können grafisch aus einer Werkzeugbox bzw. Toolbox ausgewählt werden.

Beispielsweise muss gemäß einem bestimmten Modul ein vorbestimmter festgelegter Lichtstrahl unterbrochen sein. In dem Modul kann einer der Lichtstrahlen des Lichtgitters festgelegt werden, der unterbrochen sein soll. Dadurch kann das Modul an eine bestimmte Anwendung angepasst werden.

In einem weiteren Modul kann festgelegt werden, dass ein vorbestimmter festgelegter Lichtstrahl nicht unterbrochen ist, sondern frei ist. Auch bei diesem Modul kann einer der Lichtstrahlen des Lichtgitters festgelegt werden, der nicht unterbrochen sein soll.

Die weiteren genannten Module sind ebenso vordefiniert und können vom Anwender auch modifiziert werden und auch modifiziert in der Programmiersoftware abgespeichert werden. Dadurch kann sich der Anwender einen eigenen Satz von Modulen für Stahlbewertungskriterien zusammenstellen, wodurch eine Programmierung effizienter wird.

Gemäß der Erfindung sind die Abfolgekriterien vordefiniert und mindestens eines der folgenden Abfolgekriterien ist einstellbar;
- Warten, bis ein eingestelltes Strahlbewertungskriterium erfüllt ist,
- Verzweigen, wenn ein eingestelltes Strahlbewertungskriterium erfüllt ist,
- Zeiterfassung, bis ein eingestelltes Strahlbewertungskriterium erfüllt ist,
- Erfassung eines Zählerstandes,
- Löschen eines Zwischenergebnismerkers,
- Speichern eines Zwischenergebnismerkers,
- Logische ODER-Verknüpfung von Zwischenergebnissen,
- Logische UND-Verknüpfung von Zwischenergebnissen,
- Invertieren von Zwischenergebnissen,
- Ändern einer Funktion, Einstellung oder Konfiguration des Lichtgitters,
- Einlesen eines Eingangswertes eines Eingangs.

Die Abfolgekriterien werden auch als vordefinierte Module in der Programmiersoftware bereitgestellt. Auch diese Module sind durch den Anwender modifizierbar und in der Programmiersoftware abspeicherbar. Dadurch kann sich der Anwender einen eigenen Satz von Modulen für Abfolgekriterien zusammenstellen, wodurch eine Programmierung effizienter wird.

Ein Modul der Abfolgekriterien wartet beispielsweise, bis ein eingestelltes Strahlbewertungskriterium erfüllt ist. Dadurch können beispielsweise aus einer Vielzahl von Objekten einzelne Objekte selektiert und durch ein Ausgangssignal angezeigt werden. Mit mehreren dieser Module kann eine bestimmte Kontur abgetastet werden, wobei mit jedem einzelnen Modul eine bestimmte Konturposition überprüft werden kann. Dadurch ist es beispielsweise möglich, eine komplexe Kontur mit wenigen Modulen im Programm zu überprüfen. Das Modul wird beispielsweise als Wartezeitmodul bezeichnet.

Ein weiteres Modul führt zu einer Verzweigung, wenn ein eingestelltes Strahlbewertungskriterium erfüllt ist. Dadurch können bei unterschiedlichen Objekten unterschiedliche Ausgangssignale abgegeben werden. Das Modul wird beispielsweise als Verzweigungsmodul bezeichnet.

Ein weiteres Modul erfasst die Zeit, bis ein eingestelltes Strahlbewertungskriterium erfüllt ist. Das Modul wird beispielsweise als Zeiterfassungsmodul bezeichnet. Damit können Objekte quasi vermessen werden, da die Zeit bzw. die Strecke von einem Ereignis bis zu einem nächsten Ereignis erfasst wird.

Ein weiteres Modul erfasst einen Zählerstand. Beispielsweise kann ein Zählerstand erfasst werden, bis ein eingestelltes Strahlbewertungskriterium erfüllt ist. Jedoch kann auch vorgesehen sein, ein Zählermodul zu starten, sobald ein eingestelltes Strahlbewertungskriterium erfüllt ist. Mit dieser Funktion lassen sich Objektmerkmale oder Objekte abzählen. Beispielsweise können bei einer Anwendung, bei der unterschiedliche Objekte das Lichtgitter passieren, jeweils Objekte gleicher Art getrennt gezählt und bestimmt werden.

Ein weiteres Modul ist dazu ausgebildet, ein Zwischenergebnismerker zu löschen. Dadurch kann ein Zwischenergebnismerker in einem Speicher aufgrund eines Ereignisses gelöscht werden.

Ein weiteres Modul ist dazu ausgebildet, ein Zwischenergebnismerker zu speichern. Dadurch können Zwischenergebnisse während des Programmes abgerufen werden und zur weiteren Verarbeitung in dem Programm berücksichtigt werden.

Weitere Module stellen jeweils eine logische ODER-Verknüpfung von Zwischenergebnissen bzw. eine logische UND-Verknüpfung von Zwischenergebnissen bereit. Ein weiteres Modul ermöglicht ein Invertieren von Zwischenergebnissen. Durch diese drei Module kann eine Logik frei programmiert werden. Dabei kann natürlich auch ein kombiniertes Modul aus UND-Modul und Invert-Modul bereitgestellt werden, nämlich ein sogenanntes NAND-Modul, bzw. auch ein NOR-Modul bestehend aus einem ODER-Modul und einem nachgeordneten Invert-Modul. Durch NAND-Module bzw. NOR-Module kann auch eine beliebige Logik erstellt werden.

Weitere Module ändern beispielsweise eine Funktion, eine Einstellung oder eine Konfiguration des Lichtgitters.

Weiter kann das Lichtgitter mindestens einen Eingang aufweisen. Dabei wird mindestens ein Eingangswert des Eingangs eingelesen und ausgewertet. Bei dem Eingang kann es sich um einen analogen Eingang handeln. Bevorzugt ist jedoch ein digitaler Eingang. An dem Eingang können beispielsweise externe Sensoren angeschlossen sein, oder es können Maschinensignale einer Maschinensteuerung oder einer Speicherprogrammierbaren Steuerung angeschlossen sein.

In Weiterbildung der Erfindung ist die Funktion, Einstellung oder Konfiguration des Lichtgitters mindestens eine Schaltschwelle, eine Eingangskonfiguration, eine Ausgangskonfiguration, eine Sendeleistung, eine Empfangsempfindlichkeit und/oder eine Zykluszeit.

Ein Modul der Abfolgekriterien führt beispielsweise eine Funktion, Einstellung und/oder eine Konfiguration des Lichtgitters durch, bis ein bestimmtes Strahlbewertungskriterium erfüllt ist. Beispielsweise wird von dem Lichtgitter eine Funktion durchgeführt, wobei die Sendestrahlen mit einer hohen Sendeleistung betrieben werden oder mit einer niedrigen Sendeleistung betrieben werden. Jedoch kann es auch vorgesehen sein, das Lichtgitter mit der Funktion einer hohen Empfangsempfindlichkeit oder eine niedrigen Empfangsempfindlichkeit zu betreiben.

Die zeitliche Aktivierung bzw. die zeitliche Durchführung der eingestellten Funktion, Einstellung und/oder Konfiguration kann auch beispielsweise erst durch Verschaltung mit weiteren Modulen der Abfolgekriterien erfolgen. Beispielsweise durch das Modul 'Warte bis ein Strahlbewertungskriterium erfüllt ist' oder das Modul 'Warte bis ein Eingang gesetzt ist'. Beispielsweise wird eine Funktion, Einstellung und/oder Konfiguration eingestellt, nachdem mehrere Abfolgekriterien nacheinander oder parallel erfüllt sind.

Weiter kann beispielsweise eine Zykluszeit des Lichtgitters geändert werden. Dabei wird die Zykluszeit beispielsweise verringert oder erhöht. Eine verringerte Zykluszeit ist beispielsweise sinnvoll, wenn sich eine Objektgeschwindigkeit durch das Überwachungsfeld erhöht.

Die Module der Strahlbewertungskriterien und die Module der Abfolgekriterien werden zu einem Programm miteinander verknüpft. Dadurch, dass die Module speziell für die Lichtgitterauswertung vordefiniert sind und nur noch in geringem Maße modifiziert werden brauchen, können durch den Anwender auch sehr komplexe Anwendungen einfach gelöst werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein Lichtgitter zur Überprüfung von Objekten;
- Figur 2: verschiedene Module zur Programmierung;
- Figur 3: eine grafische Programmiersoftware;
- Figur 4: eine grafische Programmiersoftware;
- Figur 5: drei Türen, die geprüft werden;
- Figur 6: ein Programm zur Prüfung der Türen;
- Figur 7: vier Fahrzeuge, repräsentativ für verschiedene Fahrzeugklassen;
- Figur 8: ein Programm zur Prüfung von Fahrzeugklassen;
- Figur 9: ein Programm zur Prüfung von Fahrzeugklassen.

In den nachfolgenden Figuren sind identische Teile mit identischen Bezugszeichen versehen.

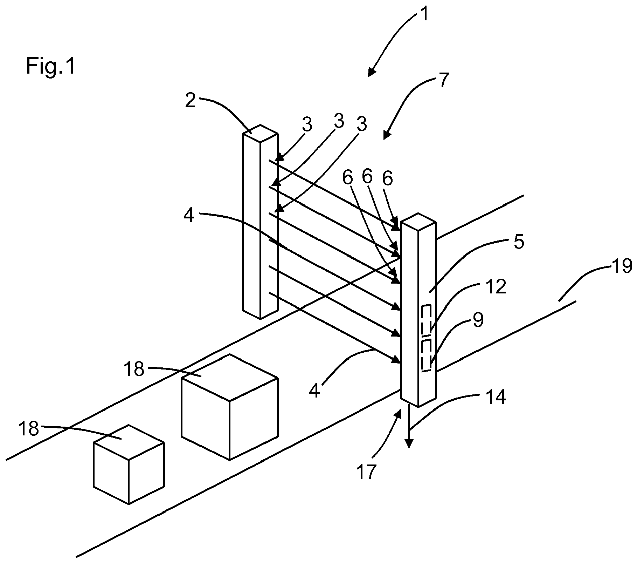

Figur 1 zeigt ein Lichtgitter mit einer Sendeeinheit 2 mit einer Vielzahl von Lichtsendern 3 zum Aussenden von Lichtstrahlen 4 und einer Empfangseinheit 5 mit einer Vielzahl von Lichtempfängern 6 zum Empfangen der Lichtstrahlen 4, wobei sich die Sendeeinheit 2 und die Empfangseinheit 5 beabstandet gegenüberstehen, wobei durch gegenüberliegende Lichtsender 3 und Lichtempfänger 6 ein Überwachungsfeld 7 gebildet ist zur Erfassung von Objekten 18, wobei die Lichtsender 3 nacheinander in Zyklen aktivierbar sind und die Lichtempfänger 6 in diesen Zyklen auswertbar sind, wobei in der Empfangseinheit 5 eine programmierbare Auswerteeinheit 9 vorgesehen ist, wobei die Auswerteeinheit 9 ausgebildet ist, empfangene Signale der Lichtempfänger 6 eines Zyklus anhand vordefinierter Strahlbewertungskriterien 10 auszuwerten, und daraus ein Zwischenergebnis zu bilden, wobei das Zwischenergebnis in einem Speicher 12 speicherbar ist und die Auswerteeinheit 9 ausgebildet ist, mindestens ein Zwischenergebnis jeweils eines Zyklus anhand mindestens jeweils eines vordefinierten Abfolgekriteriums 13 auszuwerten, und die Auswerteeinheit 9 dazu ausgebildet ist, aufgrund des ausgewerteten Zwischenergebnisses mindestens ein Ausgangssignal 14 an mindestens einem Ausgang 17 auszugeben. Die Objekte werden auf einem Förderband 19 durch das Überwachungsfeld 7 des Lichtgitters transportiert.

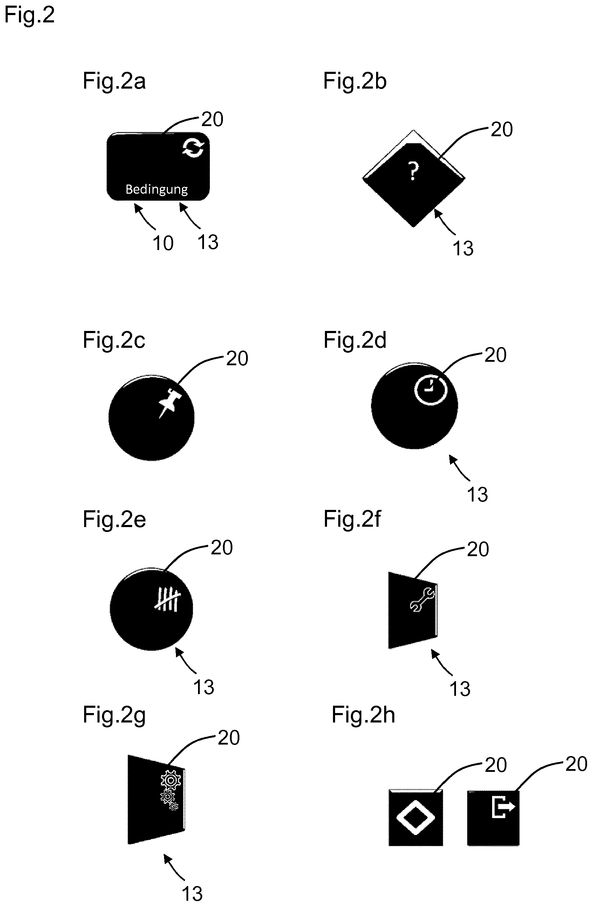

Figur 2 zeigt verschiedene Module 20 bzw. grafische Module 20 zu Strahlbewertungskriterien und Abfolgekritieren.

Figur 2a zeigt ein Modul 20 mit einem Abfolgekriterium 13 bzw. einem Strahlbewertungskriterium 10. Beispielsweise wird im Programm gewartet, bis eine bestimmte Bedingung, beispielsweise ein Strahlbewertungskriterium 10, erfüllt ist. Jedoch kann auch eine Funktion und/oder eine Ausführung einer Einstellung des Lichtgitters durchgeführt werden, bis ein bestimmtes Strahlbewertungskriterium erfüllt ist.

Figur 2b zeigt ein Modul 20 mit einem Abfolgekriterum 13. Beispielsweise wird unterschiedlich verzweigt, wenn eine Bedingung erfüllt ist oder nicht erfüllt ist.

Figur 2c zeigt ein Modul 20 als Zwischenergebnismerker. Hier kann beispielsweise eine unterbrochene Strahlanzahl zwischengespeichert werden.

Figur 2d zeigt ein Zeitmodul 20 als Abfolgekriterium 13. Beispielsweise wird die Zeit einer bestimmten Strahlunterbrechung gemessen.

Figur 2e zeigt ein Zähler-Modul 20 als Abfolgekriterium 13. Beispielsweise werden Strahlunterbrechungsereignisse gezählt.

Figur 2f zeigt beispielsweise ein Einstellungs- oder Konfigurationsmodul 20. Dabei wird eine Einstellung bzw. eine Konfiguration des Lichtgitters eingestellt oder geändert.

Figur 2g zeigt ein logisches Modul 20 als Abfolgekriterium 13. Beispielsweise kann es sich hierbei um ein UND-Verknüpfungsmodul, ein ODER-Verknüpfungsmodul, ein NOR-Verknüpfungsmodul, ein NAND-Verknüpfungsmodul oder beispielsweise um ein Invertierungsmodul handeln.

Figur 2h zeigt Module 20, die beispielsweise ein Eingangsmodul oder ein Ausgangsmodul darstellen.

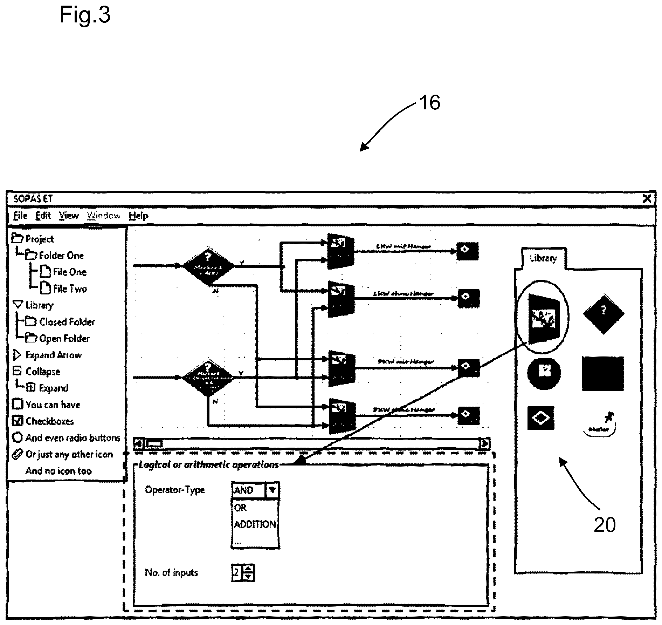

Figur 3 zeigt eine grafische Programmieroberfläche bzw. grafische Programmiersoftware 16 mit verschiedenen Bereichen. In der zweiten Zeile sind Optionen zum Öffnen, Editieren und Anzeigen von Programmen vorgesehen.

Im linken Bereich werden Projekte mit Programmen angezeigt. Darunter werden verschiedene Bibliotheken angezeigt. Im mittleren oberen Feld wird das grafische Programm angezeigt. Dieser Bereich wird optional auch 'Design Space' genannt. Darunter ist ein Editierfenster vorgesehen, um einzelne Module 20, wie Module 20 für Strahlbewertungskriterien oder Module 20 zu Abfolgekritieren zu editieren. Dieser Bereich wird optional auch als 'Context Menu' bezeichnet. Die Module 20 können aus einer Bibliothek, die im rechten Bereich angezeigt wird, ausgewählt werden. Dieser Bereich wird optional auch als 'Toolbox' bezeichnet. Anschließend können die Module 20 per Dragand-Drop, also durch einfaches Ziehen mit der Maus, in das Editierfenster oder in das Programmfenster gezogen werden. Die Verbindungen zwischen den Modulen 20 werden ähnlich wie die Module 20 aus einer Bibliothek bezogen und einfach grafisch per Maus und/oder Tastatur in das Programm eingefügt. Gemäß Figur 3 ist im Editierfenster ein logisches UND-Modul als Abfolgekriterium dargestellt.

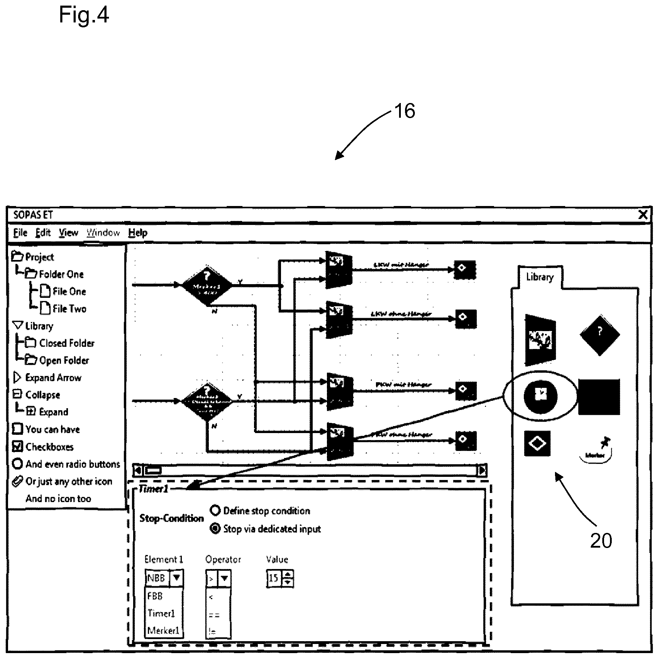

Figur 4 zeigt eine grafische Programmieroberfläche bzw. Programmiersoftware 16 mit einem Zeit-Modul 20 als Abfolgekriterium im Editierfenster.

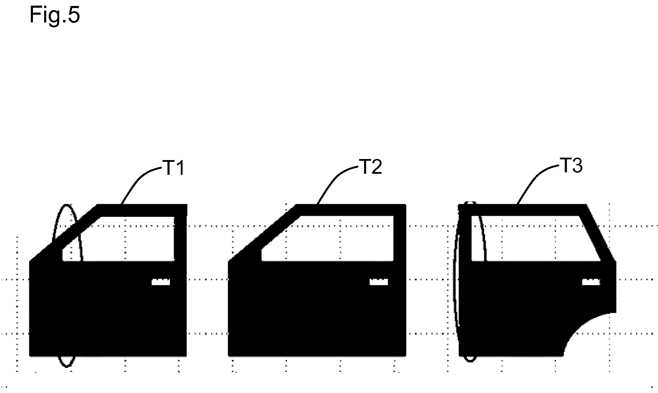

Figur 5 zeigt eine weitere Anwendung mit drei unterschiedlichen Türen T1, T2 und T3. Die Türen T1, T2 und T3 werden von dem erfindungsgemäßen Lichtgitter nacheinander abgetastet. Beispielsweise sollen drei Varianten einer Fahrzeugtür des gleichen Modells an einem Hängeförderer unterschieden werden. Es kann natürlich auch vorgesehen werden, Türen unterschiedlicher Modelle zu unterscheiden. Das Lichtgitter weist beispielsweise drei Ausgänge auf, um jeweils Ausgangssignale auszugeben.

Die Türen T1 und T2 können aufgrund ihrer Länge unterschieden werden. Die Tür T3 kann beispielsweise aufgrund der Fensterform von den Türen T1 und T2 unterschieden werden.

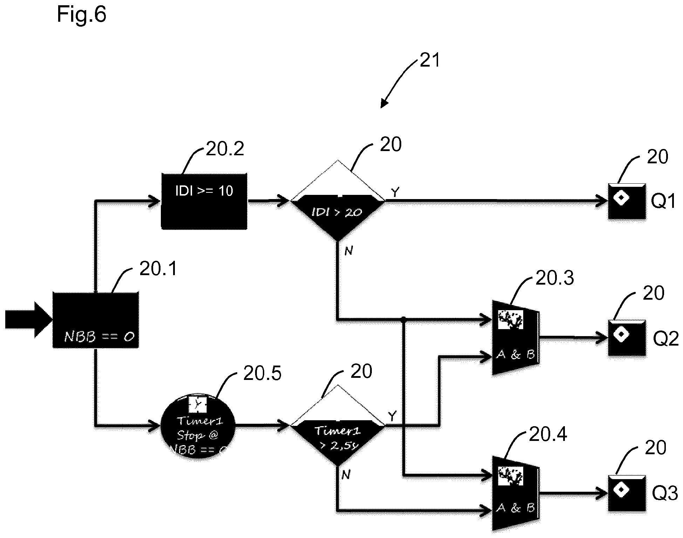

Figur 6 zeigt das zugehörige Programm 21 zu der Anwendung aus Figur 5. In einem ersten Schritt wird mit einem Modul 20.1 zur Strahlbewertung geprüft, ob ein Lichtstrahl unterbrochen wurde. Damit wird das Eintreten der Türen in das Lichtgitter geprüft. Danach verzweigt das Programm in zwei Programmpfade. Im oberen Pfad wird nun durch ein Modul 20.2 geprüft, ob die Höhe des Fensters zu Beginn größer als zehn Lichtstrahlen ist. Das ist bei allen drei Türen der Fall. In einer nächsten Verzweigung wird geprüft, ob das Innenfenster eine Höhe von größer zwanzig Lichtstrahlen zu Beginn hat. Diese Bedingung ist nur bei Tür T3 erfüllt. Daher wird an dem Ausgang Q1 ein Ausgangssignal gesetzt, um anzuzeigen, dass die Tür T3 detektiert wurde. Falls in diesem Schritt eine Tür T1 oder eine Tür T2 detektiert wurde, ist eine Verzweigung auf jeweils ein UND-Modul 20.3 bzw. 20.4 vorgesehen.

Im unteren Pfad wird die Länge der Türen gemessen. Hierzu wird in dem Modul 20.5 die Zeit gemessen, bis der Lichtweg wieder frei ist. Die Zeit wird anschließend mit einem Vergleichermodul geprüft und je nach Ergebnis verzweigt das Programm zu dem UND-Glied 20.3 zur Detektion der Tür T2 oder zu dem UND-Glied 20.4 zur Detektion der Tür T3. Ist die Zeit des Timermoduls 20.5 beispielsweise größer als 2,5 Sekunden, so handelt es sich um die Tür T2. Ist die Zeit kleiner als 2,5 Sekunden, so handelt es sich um die Tür T1. An dem Ausgang Q2 wird ein Ausgangssignal ausgegeben bei der Detektion der Tür T2 und an dem Ausgang Q3 wird ein Signal ausgegeben bei der Detektion der Tür T3.

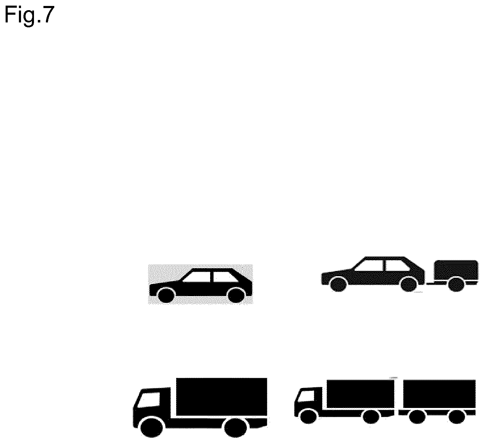

Figur 7 zeigt eine weitere Anwendung mit vier unterschiedlichen Fahrzeugklassen, die anhand charakteristischer Merkmale unterschieden werden sollen. Die Fahrzeugklassen werden wiederum durch ein nicht dargestelltes Lichtgitter detektiert.

In der oberen Reihe ist links ein PKW und rechts ein PKW mit Anhänger dargestellt. In der unteren Reihe ist links ein LKW und rechts ein LKW mit einem Anhänger dargestellt. PKWs und LKWs können einfach durch die verschiedenen Höhen voneinander unterschieden werden. Die vorhandenen Anhänger können beim PKW und beim LKW dadurch erfasst werden, dass jeweils eine Deichsel des Anhängers vorhanden ist.

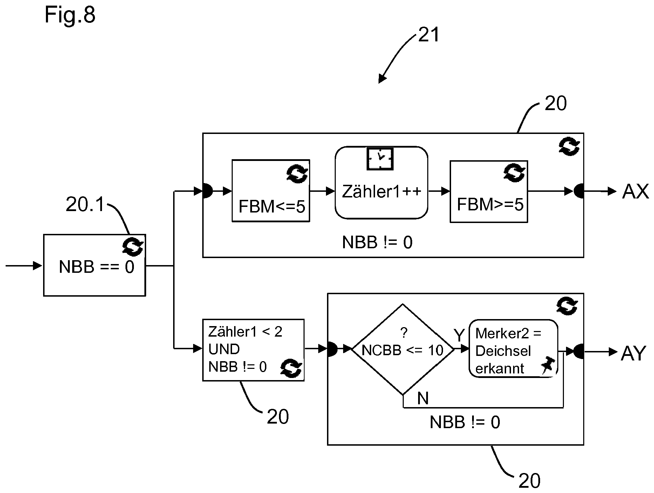

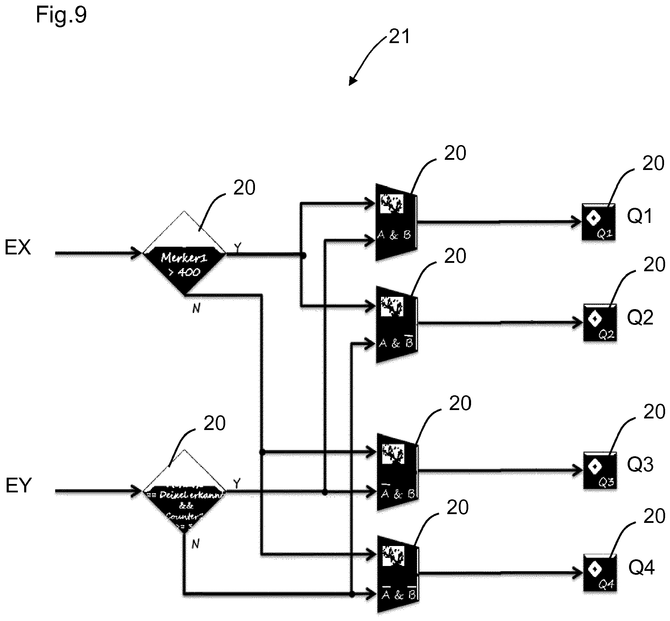

Figur 8 und Figur 9 zeigen ein grafisches Programm 21 zu der Anwendung aus Figur 7. In einem ersten Modul 20.1 gemäß Figur 8 wird geprüft, ob eine Strahlunterbrechung vorliegt.

Im oberen Pfad wird die Höhe der Fahrzeuge geprüft. Ist die Höhe größer als ein bestimmter Wert, so wird der Ausgang AX aktiviert, um anzuzeigen, dass es sich um einen LKW handelt.

Im unteren Pfad wird geprüft, ob eine Deichsel vorhanden ist. Falls eine Deichsel vorhanden ist, wird der Ausgang AY aktiviert.

Figur 9 zeigt den weiteren Teil des grafischen Programms. Die Ausgänge AX und AY aus Figur 8 sind auf die Eingänge EX und EY gemäß Figur 9 geführt. In Figur 9 werden die logischen Signale an den Eingängen EX und EY logisch verknüpft, um an den Ausgängen Q1 bis Q4 ein Ausgangssignal auszugeben. An dem Ausgang Q1 wird ein Ausgangssignal ausgegeben, wenn ein LKW mit einem Anhänger detektiert wurde. An dem Ausgang Q2 wird ein Ausgangssignal ausgegeben, wenn ein LKW ohne Anhänger detektiert wurde. An dem Ausgang Q3 wird ein Ausgangssignal ausgegeben, wenn ein PKW mit Anhänger detektiert wurde. An dem Ausgang Q4 wird ein Ausgangssignal ausgegeben, wenn ein PKW ohne Anhänger detektiert wurde.

### Bezugszeichen:

1 Lichtgitter
2 Sendeeinheit
3 Lichtsender
4 Lichtstrahlen
5 Empfangseinheit
6 Lichtempfänger
7 Überwachungsfeld
9 programmierbare Auswerteeinheit
10 Strahlbewertungskriterien
12 Speicher
13 Abfolgekriterium
14 Ausgangssignal
16 grafische Programmiersoftware
17 Ausgang
18 Objekt
19 Förderband
20 Modul
21 Programm
T1, T2, T3 Türen
AX Ausgang
AY Ausgang
EX Eingang
EY Eingang

## Patentansprüche

1. Lichtgitter mit einer Sendeeinheit (2) mit einer Vielzahl von Lichtsendern (3) zum Aussenden von Lichtstrahlen (4) und einer Empfangseinheit (5) mit einer Vielzahl von Lichtempfängern (6) zum Empfangen der Lichtstrahlen (4), wobei sich die Sendeeinheit (2) und die Empfangseinheit (5) beabstandet gegenüberstehen, wobei durch gegenüberliegende Lichtsender (3) und Lichtempfänger (6) ein Überwachungsfeld (7) gebildet ist zur Erfassung von Objekten (18), wobei die Lichtsender (3) nacheinander in Zyklen aktivierbar sind und die Lichtempfänger (6) in diesen Zyklen auswertbar sind,
**dadurch gekennzeichnet, dass**
in der Empfangseinheit (5) eine programmierbare Auswerteeinheit (9) vorgesehen ist,
wobei die Auswerteeinheit (9) ausgebildet ist, empfangene Signale der Lichtempfänger (6) eines Zyklus anhand vordefinierter Strahlbewertungskriterien (10) auszuwerten,
und daraus ein Zwischenergebnis zu bilden, wobei das Zwischenergebnis in einem Speicher (12) speicherbar ist, wobei die nicht relevanten Informationen empfangener Signale nach dem Bewerten mit den Strahlbewertungskriterien (10) der Auswerteeinheit (9) wieder verworfen werden und Informationen empfangener Signale, die keine Auswertung durch Strahlbewertungskriterien (10) zulassen, da diese keinen vorbestimmten Strahlbewertungskriterien (10) entsprechen, verworfen werden, so dass diese nicht gespeichert werden, wodurch kein Speicherplatz benötigt wird
und die Auswerteeinheit (9) ausgebildet ist, mindestens ein Zwischenergebnis jeweils eines Zyklus anhand mindestens jeweils eines vordefinierten Abfolgekriteriums (13) auszuwerten,
und die Auswerteeinheit (9) dazu ausgebildet ist, aufgrund des ausgewerteten Zwischenergebnisses mindestens ein Ausgangssignal (14) an mindestens einem Ausgang (17) auszugeben, wobei die Strahlbewertungskriterien (10) vordefiniert sind und mindestens eines der folgenden Strahlbewertungskriterien (10) einstellbar ist;
- ein vorbestimmter festgelegter Lichtstrahl (4) ist unterbrochen,
- ein vorbestimmter festgelegter Lichtstrahl (4) ist nicht unterbrochen, sondern frei,
- ein zentraler Lichtstrahl (4) ist unterbrochen,
- ein zentraler Lichtstrahl (4) ist nicht unterbrochen, sondern frei,
- ein erster Lichtstrahl (4) ist unterbrochen,
- ein erster Lichtstrahl (4) ist nicht unterbrochen, sondern frei,
- eine lückenlos zusammenhängende Anzahl von Lichtstrahlen (4) ist unterbrochen,
- eine lückenlos zusammenhängende Anzahl von Lichtstrahlen (4) ist nicht unterbrochen, sondern frei,
- ein letzter Lichtstrahl (4) ist unterbrochen,
- ein letzter Lichtstrahl (4) ist nicht unterbrochen, sondern frei,
- eine vorbestimmte festgelegte Anzahl von Lichtstrahlen (4) ist unterbrochen,
- eine vorbestimmte festgelegte Anzahl von Lichtstrahlen (4) ist nicht unterbrochen, sondern frei.
und
die Abfolgekriterien (13) vordefiniert sind und mindestens eines der folgenden Abfolgekriterien (13) einstellbar ist;
- Verzweigen, wenn ein eingestelltes Strahlbewertungskriterium (10) erfüllt ist,
- Zeiterfassung, bis ein eingestelltes Strahlbewertungskriterium (10) erfüllt ist,
- Erfassung eines Zählerstandes,
- Löschen eines Zwischenergebnismerkers,
- Speichern eines Zwischenergebnismerkers,
- Logische ODER-Verknüpfung von Zwischenergebnissen,
- Logische UND-Verknüpfung von Zwischenergebnissen,
- Invertieren von Zwischenergebnissen,
- Ändern einer Funktion, Einstellung oder Konfiguration des Lichtgitters,
- Einlesen mindestens eines Eingangswertes mindestens eines Eingangs.

2. Lichtgitter nach Anspruch 1, **dadurch gekennzeichnet, dass** die Auswerteeinheit (9) über einen Personal Computer und eine grafische Programmiersoftware (16) programmierbar ist.

3. Lichtgitter nach Anspruch 1, **dadurch gekennzeichnet, dass** die Funktion, Einstellung oder Konfiguration des Lichtgitters mindestens
- eine Schaltschwelle,
- eine Eingangskonfiguration,
- eine Ausgangskonfiguration,
- eine Sendeleistung,
- eine Empfangsempfindlichkeit
- und/oder eine Zykluszeit ist.

4. Verfahren mit einem Lichtgitter (1) mit einer Sendeeinheit (2) mit einer Vielzahl von Lichtsendern (3) zum Aussenden von Lichtstrahlen (4) und einer Empfangseinheit (5) mit einer Vielzahl von Lichtempfängern (6) zum Empfangen der Lichtstrahlen (4) der Lichtsender (3), wobei sich die Sendeeinheit (2) und die Empfangseinheit (5) beabstandet gegenüberstehen, wobei durch gegenüberliegende Lichtsender (3) und Lichtempfänger (6) ein Überwachungsfeld (7) gebildet wird zur Erfassung von Objekten (18), wobei die Lichtsender (3) nacheinander in Zyklen aktiviert werden und die Lichtempfänger (6) in diesen Zyklen ausgewertet werden,
**dadurch gekennzeichnet, dass**
in der Empfangseinheit (5) eine programmierbare Auswerteeinheit (9) vorgesehen ist,
wobei die Auswerteeinheit (9) die empfangenen Signale der Lichtempfänger (6) eines Zyklus anhand vordefinierter Strahlbewertungskriterien (10) auswertet, und daraus ein Zwischenergebnis bildet, wobei das Zwischenergebnis in einem Speicher (12) gespeichert wird, wobei die nicht relevanten Informationen empfangener Signale nach dem Bewerten mit den Strahlbewertungskriterien (10) der Auswerteeinheit (9) wieder verworfen werden und Informationen empfangener Signale, die keine Auswertung durch Strahlbewertungskriterien (10) zulassen, da diese keinen vorbestimmten Strahlbewertungskriterien (10) entsprechen, verworfen werden, so dass diese nicht gespeichert werden, wodurch kein Speicherplatz benötigt wird
und die Auswerteeinheit (9) mindestens ein Zwischenergebnis jeweils eines Zyklus anhand von jeweils mindestens einem vordefinierten Abfolgekriteriums (13) auswertet,
und die Auswerteeinheit (9) aufgrund des ausgewerteten Zwischenergebnisses mindestens ein Ausgangssignal (14) an mindestens einem Ausgang (17) ausgibt, wobei die Strahlbewertungskriterien (10) vordefiniert werden und mindestens eines der folgenden Strahlbewertungskriterien (10) eingestellt wird;
- ein vorbestimmter festgelegter Lichtstrahl (4) ist unterbrochen,
- ein vorbestimmter festgelegter Lichtstrahl (4) ist nicht unterbrochen, sondern frei,
- ein zentraler Lichtstrahl (4) ist unterbrochen,
- ein zentraler Lichtstrahl (4) ist nicht unterbrochen, sondern frei,
- ein erster Lichtstrahl (4) ist unterbrochen,
- ein erster Lichtstrahl (4) ist nicht unterbrochen, sondern frei,
- eine lückenlos zusammenhängende Anzahl von Lichtstrahlen (4) ist unterbrochen.
- eine lückenlos zusammenhängende Anzahl von Lichtstrahlen (4) ist nicht unterbrochen, sondern frei,
- ein letzter Lichtstrahl (4) ist unterbrochen,
- ein letzter Lichtstrahl (4) ist nicht unterbrochen, sondern frei,
- eine vorbestimmte festgelegte Anzahl von Lichtstrahlen (4) ist unterbrochen,
- eine vorbestimmte festgelegte Anzahl von Lichtstrahlen (4) ist nicht unterbrochen, sondern frei,
und
die Abfolgekriterien (13) vordefiniert werden und mindestens eines der folgenden Abfolgekriterien (13) eingestellt wird;
- Verzweigen, wenn ein eingestelltes Strahlbewertungskriterium (10) erfüllt ist,
- Zeiterfassung, bis ein eingestelltes Strahlbewertungskriterium (10) erfüllt ist,
- Erfassung eines Zählerstandes,
- Löschen eines Zwischenergebnismerkers,
- Speichern eines Zwischenergebnismerkers,
- Logische ODER-Verknüpfung von Zwischenergebnissen,
- Logische UND-Verknüpfung von Zwischenergebnissen,
- Invertieren von Zwischenergebnissen,
- Ändern einer Funktion, Einstellung oder Konfiguration des Lichtgitters,
- Einlesen mindestens eines Eingangswertes mindestens eines Eingangs.

5. Verfahren nach Anspruch 4, **dadurch gekennzeichnet, dass** die Auswerteeinheit (9) über einen Personal Computer (15) und eine grafische Programmiersoftware (16) programmiert wird.

6. Verfahren nach Anspruch 4, **dadurch gekennzeichnet, dass** die Einstellung oder Konfiguration des Lichtgitters mindestens
- eine Schaltschwelle,
- eine Eingangskonfiguration,
- eine Ausgangskonfiguration,
- eine Sendeleistung,
- eine Empfangsempfindlichkeit
- und/oder eine Zykluszeit ist.

## Claims

1. A light grid having
a transmission unit (2) having a plurality of light transmitters (3) for transmitting light beams (4),
a reception unit (5) having a plurality of light receivers (6) for receiving the light beams (4),
wherein the transmission unit (2) and the reception unit (5) are spaced apart from one another and are disposed opposite one another;
wherein a monitored field (7) is formed by oppositely disposed light transmitters (3) and light receivers (6) for detecting objects (18);
wherein the light transmitters (3) can be activated one after the other in cycles and the light receivers (6) can be evaluated in these cycles,
chrarcterized in that
a programmable evaluation unit (9) that is provided in the reception unit (5), wherein the evaluation unit (9) is configured to evaluate received signals of the light receivers (6) of a cycle with reference to predefined beam evaluation criteria (10) and to form an intermediate result therefrom, wherein the intermediate result can be stored in a memory (12);
wherein the non-relevant information from received signals are discarded after an evaluation using the beam evaluation criteria (10) of the evaluation unit (9) and information from receiving signals which do not allow an evaluation by beam evaluation criteria (10), as they do not correspond to any predetermined beam evaluation criteria (10), are discarded such that this information are not being stored, whereby no storage space is required and
the evaluation unit (9) is further configured to evaluate at least one intermediate result of a respective cycle with reference to at least one respective predefined sequential criterion (13); and wherein the evaluation unit (9) is also configured to output at least one output signal (14) at at least one output (17) on the basis of the evaluated intermediate result, wherein the beam evaluation criteria (10). are predefined and at least one of the following beam evaluation criteria (10) can be set:
- a predetermined, fixed light beam (4) is interrupted;
- a predetermined, fixed light beam (4) is not interrupted, but free;
- a central light beam (4) is interrupted;
- a central light beam (4) is not interrupted, but free;
- a first light beam (4) is interrupted;
- a first light beam (4) is not interrupted, but free;
- a continuous and associated number of light beams (4) is interrupted;
- a continuous and associated number of light beams (4) is not interrupted, but free;
- a last light beam (4) is interrupted;
- a last light beam (4) is not interrupted, but free;
- a predetermined, fixed number of light beams (4) is interrupted;
- a predetermined, fixed number of light beams (4) is not interrupted, but free, and the sequential criteria (13) are predefined, and at least one of the following sequential criteria (13) can be set:
- branching when a set beam evaluation criterion (10) is satisfied;
- recording time until a set beam evaluation criterion (10) is satisfied;
- recording a count;
- deleting an intermediate result marker;
- storing an intermediate result marker;
- logical OR link of intermediate results;
- logical AND link of intermediate results;
- inverting intermediate results;
- changing a function, setting or configuration of the light grid;
- reading in at least one input value of at least one input.

2. Light grid in accordance with claim 1, **characterized in that** the evaluation unit (9) can be programmed via a personal computer and a graphical programming software (16).

3. Light grid in accordance with claim 1, wherein a function of the light grid, a setting of the light grid or a configuration of the light grid is at least
- one switching threshold;
- one input configuration;
- one output configuration;
- one transmission power;
- one reception sensitivity;
- and/or one cycle time.

4. Method with a light grid (1) comprising a transmission unit (2) having a plurality of light transmitters (3) for transmitting light beams (4) and a reception unit (5) having a plurality of light receivers (6) for receiving the light beams (4) of the light transmitters (3), wherein the transmission unit (2) and the reception unit (5) are spaced apart from one another and are disposed opposite one another; wherein a monitored field (7) is formed by oppositely disposed light transmitters (3) and light receivers (6) for detecting objects (18); and wherein the light transmitters (3) are activated one after the other in cycles and the light receivers (6) are evaluated in these cycles,
**characterized in that**
a programmable evaluation unit (9) is provided in the reception unit (5), wherein the evaluation unit (9) evaluates the received signals of the light receivers (6) of a cycle with reference to predefined beam evaluation criteria (10) and wherein an intermediate result is formed therefrom, wherein the intermediate result is stored in a memory (12); and wherein the non-relevant information from received signals are discarded after an evaluation using the beam evaluation criteria (10) of the evaluation unit (9) and information from receiving signals which do not allow an evaluation by beam evaluation criteria (10), as they do not correspond to any predetermined beam evaluation criteria (10), are discarded such that this information are not being stored, whereby no storage space is required and
and the evaluation unit (9) evaluates at least one intermediate result of a respective cycle with reference to at least one respective predefined sequential criterion (13); and the evaluation unit (9) outputs at least one output signal (14) at at least one output (17) on the basis of the evaluated intermediate result, wherein the beam evaluation criteria (10) are predefined and at least one of the following beam evaluation criteria (10) can be set:
- a predetermined, fixed light beam (4) is interrupted;
- a predetermined, fixed light beam (4) is not interrupted, but free;
- a central light beam (4) is interrupted;
- a central light beam (4) is not interrupted, but free;
- a first light beam (4) is interrupted;
- a first light beam (4) is not interrupted, but free;
- a continuous and associated number of light beams (4) is interrupted;
- a continuous and associated number of light beams (4) is not interrupted, but free;
- a last light beam (4) is interrupted;
- a last light beam (4) is not interrupted, but free;
- a predetermined, fixed number of light beams (4) is interrupted;
- a predetermined, fixed number of light beams (4) is not interrupted, but free, and the sequential criteria (13) are predefined, and at least one of the following sequential criteria (13) can be set:
- branching when a set beam evaluation criterion (10) is satisfied;
- recording time until a set beam evaluation criterion (10) is satisfied;
- recording a count;
- deleting an intermediate result marker;
- storing an intermediate result marker;
- logical OR link of intermediate results;
- logical AND link of intermediate results;
- inverting intermediate results;
- changing a function, setting or configuration of the light grid;
- reading in at least one input value of at least one input.

5. Method in accordance with claim 4, **characterized in that** the evaluation unit (9) is programmed via a personal computer (15) and a graphical programming software (16).

6. Method in accordance with claim 4, **characterized in that** the setting or configuration of the light grid is at least
- one switching threshold;
- one input configuration;
- one output configuration;
- one transmission power;
- one reception sensitivity;
- and/or one cycle time.

## Revendications

1. Barrière lumineuse ayant
une unité de transmission (2) ayant une pluralité d'émetteurs de lumière (3) pour transmettre des faisceaux lumineux (4),
une unité de réception (5) ayant une pluralité de récepteurs de lumière (6) pour recevoir les faisceaux lumineux (4),
dans laquelle l'unité d'émission (2) et l'unité de réception (5) sont espacées l'une de l'autre et sont disposées l'une en face de l'autre ;
dans laquelle un champ de surveillance (7) est formé par des émetteurs de lumière (3) disposés en vis-à-vis et des récepteurs de lumière (6) pour détecter des objets (18) ;
dans laquelle les émetteurs de lumière (3) peuvent être activés l'un après l'autre en cycles et les récepteurs de lumière (6) peuvent être évalués dans ces cycles,
chrarctérisé en ce que
une unité d'évaluation programmable (9) qui est prévue dans l'unité de réception (5),
dans laquelle l'unité d'évaluation (9) est configurée pour évaluer les signaux reçus des récepteurs de lumière (6) d'un cycle par rapport à des critères d'évaluation de faisceau prédéfinis (10) et pour en former un résultat intermédiaire, le résultat intermédiaire pouvant être enregistré dans une mémoire (12) ;
dans laquelle les informations non pertinentes provenant de signaux reçus sont éliminées après une évaluation en utilisant les critères d'évaluation de faisceau (10) de l'unité d'évaluation (9) et les informations provenant de signaux de réception qui ne permettent pas une évaluation par les critères d'évaluation de faisceau (10), car elles ne correspondent à aucun critère d'évaluation de faisceau prédéterminé (10), sont éliminées de sorte que ces informations ne sont pas enregistrées, aucun espace de stockage étant nécessaire et
l'unité d'évaluation (9) est en outre configurée pour évaluer au moins un résultat intermédiaire d'un cycle respectif par rapport à au moins un critère séquentiel prédéfini respectif (13) ; et dans lequel l'unité d'évaluation (9) est également configurée pour délivrer au moins un signal de sortie (14) au moins une sortie (17) sur la base du résultat intermédiaire évalué, les critères d'évaluation de faisceau (10) étant prédéfinis et au moins un des critères suivants (10) peut être établi :
- un faisceau lumineux fixe prédéterminé (4) est interrompu ;
- un faisceau lumineux fixe prédéterminé (4) n'est pas interrompu, mais libre ;
- un faisceau lumineux central (4) est interrompu;
- un faisceau lumineux central (4) n'est pas interrompu, mais libre ;
- un premier faisceau lumineux (4) est interrompu ;
- un premier faisceau lumineux (4) n'est pas interrompu, mais libre ;
- un nombre continu et associé de faisceaux lumineux (4) est interrompu ;
- un nombre continu et associé de faisceaux lumineux (4) n'est pas interrompu, mais libre ;
- un dernier faisceau lumineux (4) est interrompu ;
- un dernier faisceau lumineux (4) n'est pas interrompu, mais libre ;
- un nombre prédéterminé et fixe de faisceaux lumineux (4) est interrompu ;
- un nombre prédéterminé et fixe de faisceaux lumineux (4) n'est pas interrompu, mais libre,
et les critères séquentiels (13) sont prédéfinis et au moins l'un des critères séquentiels suivants (13) peut être défini :
- la dérivation lorsqu'un critère d'évaluation de faisceau défini (10) est satisfait ;
- durée d'enregistrement jusqu'à ce qu'un critère d'évaluation de faisceau défini (10) soit satisfait ;
- l'enregistrement d'un comptage ;
- suppression d'un marqueur de résultat intermédiaire ;
- la mémorisation d'un marqueur de résultat intermédiaire ;
- lien OU logique des résultats intermédiaires ;
- lien logique ET des résultats intermédiaires ;
- l'inversion des résultats intermédiaires ;
- modification d'une fonction, d'un réglage ou d'une configuration de la barrière lumineuse ;
- lecture d'au moins une valeur d'entrée d'au moins une entrée.

2. Barrière lumineuse selon la revendication 1, **caractérisée en ce que** l'unité d'exploitation (9) peut être programmée via un ordinateur personnel et un logiciel de programmation graphique (16).

3. Barrière lumineuse selon la revendication 1, dans laquelle une fonction de la barrière lumineuse, un réglage de la barrière lumineuse ou une configuration de la barrière lumineuse est au moins
- un seuil de commutation ;
- configuration à une entrée ;
- une configuration de sortie ;
- une puissance de transmission ;
- une sensibilité de réception ;
- et/ou un temps de cycle.

4. Procédé avec une grille de lumière (1) comprenant une unité de transmission (2) ayant une pluralité d'émetteurs de lumière (3) pour transmettre des faisceaux lumineux (4) et une unité de réception (5) ayant une pluralité de récepteurs de lumière (6) pour recevoir les faisceaux lumineux (4) des émetteurs de lumière (3), l'unité de transmission (2) et l'unité de réception (5) étant écartées et disposées l'une à l'autre en regard de l'autre ; dans laquelle un champ de surveillance (7) est formé par des émetteurs de lumière (3) et des récepteurs de lumière (6) disposés de manière opposée pour détecter des objets (18) ; et dans laquelle les émetteurs de lumière (3) sont activés les uns après les autres en cycles et les récepteurs de lumière (6) sont évalués dans ces cycles,
**caractérisé en ce que**
une unité d'évaluation programmable (9) est prévue dans l'unité de réception (5),
dans laquelle l'unité d'évaluation (9) évalue les signaux reçus des récepteurs de lumière (6) d'un cycle par rapport à des critères d'évaluation de faisceau prédéfinis (10) et dans laquelle un résultat intermédiaire est formé à partir de ceux-ci, le résultat intermédiaire étant enregistré dans une mémoire (12) ; et dans lequel les informations non pertinentes provenant de signaux reçus sont éliminées après une évaluation en utilisant les critères d'évaluation de faisceau (10) de l'unité d'évaluation (9) et les informations provenant de signaux de réception qui ne permettent pas une évaluation par les critères d'évaluation de faisceau (10), car elles ne correspondent à aucun critère d'évaluation de faisceau prédéterminé (10), sont éliminées de sorte que ces informations ne sont pas enregistrées, aucun espace de stockage étant requis et que et l'unité d'évaluation (9) évalue au moins un résultat intermédiaire d'un cycle respectif par rapport à au moins un critère séquentiel prédéfini respectif (13) ; et l'unité d'évaluation (9) délivre au moins un signal de sortie (14) à au moins une sortie (17) sur la base du résultat intermédiaire évalué, les critères d'évaluation de faisceau (10) étant prédéfinis et au moins un des critères suivants (10) peut être réglé :
- un faisceau lumineux fixe prédéterminé (4) est interrompu ;
- un faisceau lumineux fixe prédéterminé (4) n'est pas interrompu, mais libre ;
- un faisceau lumineux central (4) est interrompu ;
- un faisceau lumineux central (4) n'est pas interrompu, mais libre ;
- un premier faisceau lumineux (4) est interrompu ;
- un premier faisceau lumineux (4) n'est pas interrompu, mais libre ;
- un nombre continu et associé de faisceaux lumineux (4) est interrompu ;
- un nombre continu et associé de faisceaux lumineux (4) n'est pas interrompu, mais libre ;
- un dernier faisceau lumineux (4) est interrompu ;
- un dernier faisceau lumineux (4) n'est pas interrompu, mais libre ;
- un nombre prédéterminé et fixe de faisceaux lumineux (4) est interrompu ;
- un nombre prédéterminé et fixe de faisceaux lumineux (4) n'est pas interrompu, mais libre,
et les critères séquentiels (13) sont prédéfinis et au moins l'un des critères séquentiels suivants (13) peut être défini :
- la dérivation lorsqu'un critère d'évaluation de faisceau défini (10) est satisfait ;
- durée d'enregistrement jusqu'à ce qu'un critère d'évaluation de faisceau défini (10) soit satisfait ;
- l'enregistrement d'un comptage ;
- suppression d'un marqueur de résultat intermédiaire ;
- la mémorisation d'un marqueur de résultat intermédiaire ;
- lien OU logique des résultats intermédiaires ;
- lien logique ET des résultats intermédiaires ;
- l'inversion des résultats intermédiaires ;
- modification d'une fonction, d'un réglage ou d'une configuration de la barrière lumineuse ;
- lecture d'au moins une valeur d'entrée d'au moins une entrée.

5. Procédé selon la revendication 4, **caractérisé en ce que** l'unité d'exploitation (9) est programmée via un ordinateur personnel (15) et un logiciel de programmation graphique (16).

6. Procédé selon la revendication 4, **caractérisé en ce que** le réglage ou la configuration de la grille lumineuse est d'au moins
- un seuil de commutation ;
- configuration à une entrée ;
- une configuration de sortie ;
- une puissance de transmission ;
- une sensibilité de réception ;
- et/ou un temps de cycle.
